Europäisches Patentamt

European Patent Office

Office européen des brevets

(19)

(11) EP 0 454 071 B1

(12) EUROPEAN PATENT SPECIFICATION

(45) Date of publication and mention
of the grant of the patent:
14.08.1996 Bulletin 1996/33

(51) Int Cl.6: G02F 1/37

(21) Application number: 91106547.2

(22) Date of filing: 23.04.1991

(54) **Wavelength conversion by quasi phase matching and the manufacture and use of optical articles therefor**

Wellenlängenumwandlung durch quasi Phasenanpassung und Herstellung und Verwendung einer Vorrichtung hierfür

Conversion de longueur d'onde par quasi-accord de phase, et fabrication et utilisation d'un dispositif pour cela

(84) Designated Contracting States:
BE CH DE DK ES FR GB IT LI NL SE

(30) Priority: 25.04.1990 US 514787
26.04.1990 US 514822

(43) Date of publication of application:
30.10.1991 Bulletin 1991/44

(73) Proprietors:
• NORTH AMERICAN PHILIPS CORPORATION
Tarrytown, New York 10591 (US)
• E.I. DU PONT DE NEMOURS AND COMPANY
Wilmington Delaware 19898 (US)

(72) Inventors:
• Bierlein, John David
Wilmington, Delaware 19803 (US)
• Brown, Joseph Bryan, III
Newark, Delawarw 19711 (US)
• van der Poel, Carolus Johannes
Eindhoven (NL)

(74) Representative: Sajda, Wolf E., Dipl.-Phys. et al
MEISSNER, BOLTE & PARTNER
Widenmayerstrasse 48
80538 München (DE)

(56) References cited:
• JOURNAL OF THE OPTICAL SOCIETY OF AMERICA, vol. B6, no. 4, April 1990, New York US, pp. 622-633 ; J.D. BIERLEIN et al.: "Potassium titanyl phosphate : properties and new applications"
• APPLIED PHYSICS LETTERS, vol. 57, no. 20, 12 November 1990, New York US, pp. 2074-2076; C.J. VAN DER POEL et al.: "Efficient type I blue second-harmonic generation in periodically segmented KTiOPO(4) waveguides"

**Description**

FIELD OF THE INVENTION

This invention relates to optical articles and more particularly to optical articles useful for wavelength conversion.

BACKGROUND OF THE INVENTION

The advantages of optical systems for communications, optical storage and other applications has spurred the search for optical mediums with high nonlinearity, good optical quality, and the ability to phase match to increase the frequency of incident laser light. A challenge often encountered in the design of such systems is the efficient generation of optical waves with wavelengths which are particularly suitable for use in such systems. For example, while efficient laser generating of infrared waves is commonly available, the direct generation of certain more desirable waves having shorter wavelengths is often considerably more difficult.

One approach to providing waves with more desirable wavelengths has been wavelength conversion whereby articles containing an optical medium are used to at least partially convert optical waves incident to the medium to exiting optical waves having a different wavelength. A frequently used wavelength conversion process involves second harmonic generation where the frequency of waves generated is doubled with respect to the incident waves. In the typical process incident optical waves are directed through a medium (e.g., an inorganic nonlinear crystal) in which optical waves having wavelengths corresponding to the second harmonic of the wavelength of the incident optical wave are generated by interaction between the medium and the optical waves and exit the medium.

Typically in optical articles for wavelength conversion, waves of suitable wavelength are generated over the length of the medium. It is well known in designing such articles that unless means are provided for inhibiting destructive interference between the waves generated at various points along the medium length, the efficiency of wavelength conversion schemes such as second harmonic generation can be severely limited. Accordingly, there is generally a need to employ some technique to control the effects of such destructive interference.

In somewhat more theoretical terms, wavelength conversion systems may be generally addressed in terms of a propagation constant k for each of the interacting optical waves in the conversion medium. For the purposes of this description, k for each optical wave may be defined as equal to $2\pi n/\lambda$, where n is the refractive index of the medium and $\lambda$ is the wavelength of the wave. In view of the inverse relationship between the propagation constant and the wavelength, and the fact that the refractive index can be different for optical waves of different frequencies, the propagation constant for each of the interacting optical waves in the conversion medium can clearly be different.

Generally, for wavelength conversion the sum of frequencies of the interacting incident waves is equal to the sum of the frequencies of the waves generated by the interaction. To minimize the destructive interference between waves generated in the medium, it has generally been considered desirable that the sum of the propagation constants of the interacting incident waves also closely approximate the sum of the propagation constants of the waves generated by the interaction. In other words, for the optical waves involved in the wavelength conversion, it has been considered desirable for efficient wavelength conversion that the difference between the total propagation constants for the incident waves in the medium and the total propagation constants for the waves generated in the medium (i.e., the $\Delta k$ for the medium) be about zero. Adjusting a wavelength conversion system to a condition where $\Delta k$ is about zero is known as phase matching.

An optical parameter of some interest in wavelength conversion systems for a particular medium is the coherence length, coh, which is generally defined as $\frac{2\pi}{\Delta k}$. For conditions where $\Delta k$ is equal to about zero, it is evident that the corresponding coh is relatively large.

In a normal phase matching process involving the nonlinear interaction of three beams in a crystal system where two beams of incident optical waves having respective frequencies $\omega_1$ and $\omega_2$ and respective wavelengths $\lambda_1$ and $\lambda_2$ are directed through a medium (e.g., a crystal or a composite material) having a refractive index $n(\omega)$ which varies as a function of the optical wave frequency, to generate optical waves having a frequency $\omega_3$ and a wavelength $\lambda_3$, a beam propagation constant k is defined for each wave beam as equal to $2\pi n(\omega)/\lambda$, and a $\Delta k$ for the optical medium is represented by the relationship:

$$\Delta k = \frac{2\pi n(\omega_3)}{\lambda_3} - \frac{2\pi n(\omega_2)}{\lambda_2} - \frac{2\pi n(\omega_1)}{\lambda_1} .$$

The maximum output intensity occurs in such a system when under conditions where the phase system is matched (i.e., $\Delta k$ is zero). The intensity of output for a phase matched system generally increases in proportion to $h^2$, the square of the length, h, of the optical medium (e.g., the crystal).

For second harmonic generation systems the frequencies $\omega_1$ and $\omega_2$ are taken as equal and as one half of the frequency $\omega_3$. Accordingly, the wavelengths $\lambda_1$ and $\lambda_2$ are twice the wavelength $\lambda_3$ and $\Delta k$ for second harmonic gen-

eration systems may be represented in terms of the above example, by the relationship:

$$\Delta k = \frac{2\pi}{\lambda_3} \left( n(\omega_3) - n(\omega_1) \right).$$

The coherence length for such second harmonic generation systems may thus be represented by the relationship:

$$coh = \frac{\lambda_3}{n(\omega_3) - n(\omega_1)} = \frac{0.5\lambda_1}{n(\omega_3) - n(\omega_1)} .$$

An alternate example of a wave conversion scheme involves generating two waves with wavelengths $\lambda_5$ and $\lambda_6$ from a single input wave of wavelengths $\lambda_4$.

Several techniques have been demonstrated or proposed for achieving efficient phase matching. (See, for example, F. A. Hopf et al., Applied Classical Electrodynamics, Volume II, Nonlinear Optics, John Wiley & Sons, 1986, pp. 29-56.) The most common of these are the angle and temperature tuning techniques used in nearly all current applications such as second harmonic generation and sum and difference frequency generation. In angle tuning of bulk material such as a single crystal, the orientation of the crystal relative to the incident light is adjusted to achieve phase matching. The technique is generally considered inappropriate for use in waveguide structures which, by nature of their design, must be oriented in a particular direction relative to the incident waves. Temperature tuning relies on the temperature dependence of the birefringence of the material and may be used for waveguides as well as bulk material. However, for many materials the temperature dependence of the birefringence is large and, although temperature tuning is possible for waveguides in these materials, a high degree of temperature control must be provided (e.g., +/- 1°C). In optical materials where the temperature dependence of the birefringence is small (e.g. $KTiOPO_4$), although a high degree of temperature control is not necessary, the range of wavelengths over which temperature tuning is possible for waveguides is small.

Phase matching for second harmonic generation using periodic variations in the refractive index to correct for the fact that $\Delta k$ is not equal to 0, can be accomplished by reflecting back both the fundamental and second harmonic beams in such a way that the reflected beams are phase matched (see, for example, S. Somekh, "Phase-Interchangeable Nonlinear Optical Interactions in Periodic Thin Films," Appl. Phys. Lett., 21, 140 (1972)). As with the methods above, the intensity of the second harmonic output increases with the square of the length of the material used. However, in practice, the overall efficiency of this method is even less than the methods discussed above.

Recently, a particularly useful wavelength conversion technique has been developed by J. Bierlein et al., which involves directing the incident optical waves for wavelength conversion through a series of aligned sections of optical materials for wavelength conversion, said sections being selected such that the sum for the series of sections of the product of the length of each section in the direction of alignment and the $\Delta k$ for that section is equal to about zero, and such that the length of each section is less than its coherence length; wherein either at least one of said materials is optically nonlinear or a layer of nonlinear optical material is provided adjacent to said series during wavelength conversion, or both. This technique is based on the discovery that wavelength conversion can be accomplished by using a series of sections of optical materials wherein the differences in the refractive indices and the section lengths are balanced to control the effects of destructive interference through the series such that the optical waves are phase matched at the end of the series even though they are not phase matched in the individual sections. (See U.S. Patent Application No. 07/449,616.)

Other techniques for wavelength conversion, which are known as "quasi" phase matching techniques, and include periodic domain reversals or internal reflection have also been described (see J. A. Armstrong et al., "Interactions between Light Waves in a Nonlinear Dielectric", Phys. Rev., 127, 1918 (1962)). Quasi phase matching in optical waveguides has been described using periodically modulated $LiNbO_3$ which achieve phase matching by periodically reversing the sign of the nonlinear optical coefficient with a period length such that the product of $\Delta k$ and period length of the waveguide is about equal to $2N\pi$, where N is an odd integer. Periodically domain-inverted channel waveguides utilizing $LiNbO_3$ are described by J. Webjorn, F. Laurell, and G. Arvidsson in Journal of Lightwave Technology, Vol. 7, No. 10, 1597-1600 (October 1989) and IEEE Photonics Technology Letters, Vol. 1, No. 10, 316-318 (October 1989). Waveguide fabrication is described using titanium to achieve the periodic domain inversion, or using a periodic pattern of silicon oxide on the positive c-face of $LiNbO_3$ in combination with heat treatment and subsequent proton exchange. G. A. Magel, M. M. Fejer and R. L. Byer, Appl. Phys. Let. 56, 108-110 (1990) disclose $LiNbO_3$ crystals with periodically alternating ferroelectric domains produced using laser-heated pedestal growth. These structures generated light at wavelengths as short as 407 nm and were relatively resistant to photorefractive damage for structures of this type. However, these periodically modulated waveguides are considered difficult to fabricate and have optical damage thresholds which are too low for many applications. Hopf et al., supra, discloses at page 52 segments of nonlinear optical material where the nonlinear optical coefficient is modulated at a period equal to the coherence length for the waves in the material.

Other modulated waveguide schemes have been described in the art which can give phase matching by using lengths of adjacent materials which are equal to the coherence length. However, these periodically modulated schemes can be very sensitive to waveguide parameters, such as waveguide depth and modulation period, and are not highly efficient with respect to conversion.

There remains a need for wavelength conversion schemes for efficiently converting fundamental optical waves to useful alternate wavelengths.

## SUMMARY OF THE INVENTION

The invention provides a method for wavelength conversion as defined in claim 1, an optical article for use in a wavelength conversion system as defined in claim 9, an optical waveguide device comprising an optical article according to the invention as defined in claim 17 and a process for preparing a channel waveguide for a wavelength conversion system as defined in claim 18. Specific embodiments of the process for wavelength conversion and the optical article to the invention have been defined in depending claims.

This invention makes use of the well known advantages of $KTiOMO_4$-type materials (where M is P or As), such as high nonlinearity and resistance to damage, as well as quasi phase matching, and provides for changing the sign and/or magnitude of the nonlinear optical coefficient (i.e., "d") to achieve wavelength conversion. A series of sections of optical materials is used in accordance with this invention to accomplish wavelength conversion by quasi phase matching. The series of sections is characterized such that the nonlinear optical coefficient for at least one section is changed relative to the nonlinear optical coefficient for at least one adjacent section; and such that the sum for the series of the product of the length (i.e., $h_i$) and $\Delta k$ for each section (i.e., $\Delta k_i$) is equal to about $2N\pi$ (i.e.,

$$\sum_i \Delta k_i h_i = 2\pi N)$$

where N is an integer other than zero. A preferred method of changing the nonlinear optical coefficient includes reversing the axis of polarization for at least one section relative to the axis of polarization for at least one adjacent section. Preferably, there is at least about 1% difference between the nonlinear optical coefficient for at least one section and the nonlinear optical coefficient for at least one adjacent section; and preferably there is at least about 0.00025 difference between the surface index of refraction of said at least one section and the surface index of refraction of said at least one adjacent section.

A process for wavelength conversion is provided in accordance with this invention which comprises the step of directing the incident optical waves for wavelength conversion through a single crystal containing a series of aligned sections of optical materials selected from (a) materials having the formula $K_{1-x}Rb_xTiOMO_4$ where x is from 0 to 1 and M is selected from the group consisting of P and As and (b) materials of said formula wherein the cations of said formula are partially replaced by at least one of $Rb^+$, $Tl^+$, $Cs^+$ and at least one of $Ba^{++}$, $Sr^{++}$ and $Ca^{++}$ (with the provisos that at least one section is of optical materials selected from (b) and that for optical materials selected from (b) wherein x is greater than 0.8, the cations of said formula are partially replaced by at least one of $Tl^+$ and $Cs^+$ and at least one of $Ba^{++}$, $Sr^{++}$ and $Ca^{++}$), said sections being selected such that the sum for the series of sections of the product of the length of each section in the direction of alignment (i.e., $h_i$) and the $\Delta k$ for that section (i.e., $\Delta k_i$) is equal to about $2\pi N$ (i.e.,

$$\sum_i \Delta k_i h_i = 2\pi N)$$

where N is an integer other than 0, and such that the nonlinear optical coefficient of at least one section is changed relative to the nonlinear optical coefficient of at least one adjacent section. The $\Delta k$ for each section is the difference between the sum of the propagation constants for the incident waves for the wavelength conversion system in that section and the sum of the propagation constant for the generated waves for the wavelength conversion system in that section. The process may be used to generate beams having a certain wavelength from two incident beams. Alternatively, the process may be used to generate two beams from one incident beam. A preferred use of the wavelength conversion process, however, is for second harmonic generation, wherein the generated waves have a wavelength which is one-half the wavelength of the incident beams.

A specific embodiment of the process according to the invention is for efficiently generating blue light and comprises the step of applying light having wavelength in the range of 775 to 950 nm to a periodically segmented non-linear optical KTP waveguide structure having a periodicity of 3 to 6 $\mu$m.

Another specific embodiment of the process according to the invention is for obtaining Type I frequency multiplication and comprises the following steps: Providing a periodically segmented non-linear optical KTP waveguide and applying TM polarized light to the non-linear optical KTP waveguide.

Optical articles are provided in accordance with this invention for use in a wavelength conversion system. The articles comprise at least one optical conversion segment consisting of a single crystal containing a series of aligned sections of optical materials selected from (a) materials having the formula $K_{1-x}Rb_xTiOMO_4$ and (b) materials of said formula wherein the cations of said formula have been partially replaced by at least one of $Rb^+$, $Tl^+$, and $Cs^+$, and at least one of $Ba^{++}$, $Sr^{++}$ and $Ca^{++}$ (with the provisos that at least one section is of optical materials selected from (b) and that for optical materials selected from (b) wherein x is greater than 0.8, the cations of said formula are partially replaced by at least one of $Tl^+$ and $Cs^+$ and at least one of $Ba^{++}$, $Sr^{++}$ and $Ca^{++}$), wherein said sections are selected so that the sum of the product of the length of each section (i.e., $h_i$) and the $\Delta k$ for that section (i.e., $\Delta k_i$) is equal to about $2\pi N$ (i.e.,

$$\sum_i \Delta k_i h_i \cong 2\pi N)$$

where N is an integer other than 0, and the nonlinear optical coefficient of at least one section is changed relative to the nonlinear optical coefficient of at least one adjacent section.

For a segment having p sections of respective lengths $h_1$, $h_2$, ...$h_i$, ...$h_p$ characterized as having a series of propagation constants $k_1$, $k_2$, .... $k_i$, ...$k_p$ for each of the optical waves in the wavelength conversion system wherein $k_i = 2\pi n_i(\omega)/\lambda$, and $n_i(\omega)$ and $\lambda$ are respectively the refractive index in the section and wavelength, a $\Delta k$ is provided for each section which corresponds to the difference between the total propagation constants for the incident waves for the wavelength conversion system in the section and the total propagation constants for the generated waves for the wavelength conversion system in the section. In accordance with this invention, the sections for each segment are selected so that the sum $\Delta k_1 h_1 + \Delta k_2 h_2 + ... \Delta k_i h_i + ... \Delta k_p h_p$ for the segment (i.e., the sum $h_i \Delta k_i$ for the series, or

$$\sum_i \Delta k_i h_i)$$

is equal to about $2\pi N$, and the nonlinear optical coefficient of at least one section is changed relative to the nonlinear optical coefficient of at least one adjacent section.

A preferred embodiment involves second harmonic generation.

The invention further provides for improved optical devices which comprise at least one optical article, means to couple an incoming optical wave into said optical article and means to couple an outgoing wave out of said optical article, wherein the improvement comprises using an optical article constructed in accordance with this invention. For example, channel waveguides constructed in accordance with this invention can be used to improve optical waveguide devices which comprise at least one channel waveguide, means to couple an incoming optical wave into said channel waveguide and means to couple an outgoing wave out of said channel waveguide.

This invention further provides a process for preparing an optical article. One process for preparing a channel waveguide having a series of aligned sections wherein the nonlinear optical coefficient of at least one section is changed relative to the nonlinear optical coefficient of at least one adjacent section for a wavelength conversion system in accordance with this invention comprises the steps of: (1) providing the z-surface of a z-cut substrate of single crystal material having the formula $K_{1-x}Rb_xTiOMO_4$ wherein x is from zero to one and M is P or As, with an optically smooth surface; (2) providing a molten salt containing cations selected from the group consisting of $Rb^+$, $Cs^+$ and $Tl^+$ and cations selected from the group consisting of $Ba^{++}$, $Sr^{++}$ and $Ca^{++}$ (with the proviso that when x is greater than 0.8, the molten salt contains cations selected from $Cs^+$ and $Tl^+$) in an amount effective to provide upon exposure to said optically smooth surface at a selected temperature for a selected time, sufficient cation replacement to change the index of refraction with respect to the index of refraction of said substrate and to provide a nonlinear optical coefficient which is changed with respect to the nonlinear optical coefficient of the substrate; (3) applying a masking material on said substrate to provide a pattern of aligned areas along a portion of said optically smooth z-surface which are alternately masked with a material resistant to said molten salt and unmasked; (4) immersing said masked substrate in said molten salt at said selected temperature for said seleted time, thereby providing cation replacement in said unmasked areas; (5) removing the masking material from said substrate; and (6) finishing said substrate to provide a clean waveguide with polished waveguide input and output faces. In this process, the lengths of the masked and unmasked areas are selected such that after cation replacement in the unmasked areas, a waveguide which comprises at least one optical conversion segment consisting of a series of aligned sections of optical materials for wavelength conversion in accordance with this invention is provided. The invention is considered particularly useful for the generation of blue light using modified $KTiOPO_4$ single crystals.

<u>BRIEF DESCRIPTION OF THE DRAWINGS</u>

Figure 1 is a schematic drawing of an apparatus for wavelength conversion in accordance with this invention.
Figure 2 is a perspective view of a waveguide for wavelength conversion in accordance with this invention.
Figure 3 is a perspective view of the aligned sections of nonlinear optical material provided by the waveguide of Figure 2.

Figure 4 is a perspective view of another embodiment of a waveguide for wavelength conversion in accordance with this invention.

Figure 5 is an illustrative plot of a calculated relationship between depth and refractive index mismatch for different waveguide widths.

Figure 6 illustrates the correlation of second harmonic wavelength with the period of the waveguide.

## DETAILED DESCRIPTION OF THE INVENTION

In accordance with this invention means are provided which are suitable for at least partially converting optical waves having one wavelength, into optical waves of a different wavelength. In general, during wavelength conversion the sum of the frequencies of the incident waves and the sum of the frequencies of the generated waves is equal. Accordingly, for wavelength conversion systems where waves of frequency $\omega_1$ and wavelength $\lambda_1$ are used along with waves of frequency $\omega_2$ and wavelength $\lambda_2$ to generate waves of frequency $\omega_3$ and wavelength $\lambda_3$, $\omega_3$ is equal to the sum of $\omega_1$ and $\omega_2$; and for wavelength conversion systems where waves of frequency $\omega_4$ and wavelength $\lambda_4$ are used to generate waves of frequency $\omega_5$ and wavelength $\lambda_5$ along with waves of frequency $\omega_6$ and wavelength $\lambda_6$, $\omega_4$ is equal to the sum of $\omega_5$ and $\omega_6$.

A process for wavelength conversion is provided in accordance with this invention which comprises the step of directing the incident optical waves for wavelength conversion through a single crystal containing a series of aligned sections of optical materials for wavelength conversion, said sections being selected such that the sum for the series of sections of the product of the length of each section in the direction of alignment and the $\Delta k$ for that section is equal to about $2N\pi$ where N is an integer other than zero, and the nonlinear optical coefficient for a least one section is changed relative to the nonlinear optical coefficient of at least one adjacent section. As further discussed below $\Delta k$ for each section is the difference between the sum of the propagation constants for the incident waves for the wavelength conversion system in that section and the sum of the propagation constants for the generated waves for the wavelength conversion system in that section.

The crystalline optical materials used in this invention are single crystal materials having the formula $K_{1-x}Rb_xTiOMO_4$ where x is from 0 to 1 and M is selected from the group consisting of P and As and single crystal material of said formula wherein the cations of said formula have been partially replaced by at least one of $Rb^+$, $Tl^+$ and $Cs^+$, and at least one of $Ba^{++}$, $Sr^{++}$ and $Ca^{++}$. At least one of the aligned sections in the series should be of an optical material of said formula wherein the cations have been partially replaced by at least one of $Ba^{++}$, $Sr^{++}$ and $Ca^{++}$. For practical reasons, when using material of said formula wherein the cations have been partially replaced and x is about 0.80 or more, the monovalent replacement cations should include $Cs^+$, $Tl^+$ or both $Cs^+$ and $Tl^+$. The sections are preferably aligned on the z surface of the crystal.

The process may be used to generate beams having a certain wavelength from two incidental beams. Alternatively, the process may be used to generate two beams from one incident beam. A preferred use of the wavelength conversion process, however, is for second harmonic generation, wherein the generated waves have a wavelength which is one-half the wavelength of the incident beams.

The optical articles of this invention for use in a wavelength conversion system comprise at least one optical conversion segment consisting of a single crystal containing a series of aligned sections of optical materials for wavelength conversion. The sections are preferably aligned on the z surface of the crystal. The series may be represented as a plurality of p aligned adjacent sections of optical materials, $m_1$, $m_2$, ...$m_i$, ...$m_p$, each having a composition within the formula $K_{1-x}Rb_xTiOMO_4$ and composition where the cations of said formula have been replaced as defined above. Each section is characterized by a length $h_i$ in the direction of alignment and a refractive index $n_i(\omega)$ which varies as a function of frequency $\omega$ of the optical waves passing therethrough. The difference between the total propagation constant of the incident waves for each aligned section and the total propagation constants for the waves generated for each of the aligned sections defines a $\Delta k_i$ for the section. In accordance with this invention, the sections for each of said segments are selected so that the sum of the product of $\Delta k$ for a section and the length h for said section over the segment (i.e., $\Delta k_1 h_1 + \Delta k_2 h_2 + ...\Delta k_i h_i + ...\Delta k_p h_p$) is equal to about $2\pi N$ where N is an integer other than 0; and the nonlinear optical coefficient of at least one section is changed relative to the nonlinear optical coefficient of at least one adjacent section.

The relationship of the product of the length of each section and the $\Delta k$ for each section in accordance with this invention is identical to conventional refractive index grating phase matching. However, in accordance with this invention, the length of each section can in general be any length, other than zero, consistent with the condition that the sum of the product of the length of each section, $h_i$, and the $\Delta k_i$ for that section is equal to about $2N\pi$ over the length of the optical conversion segment, i.e., for an optical conversion segment containing p sections (i.e., i is from I to p),

$$\sum_i \Delta k_i h_i \approx 2N\pi .$$

It is desirable that the

$$\sum_i \Delta k_i h_i$$

be as close to $2\pi N$ as practical. It should be understood, however, that perfect balance of the optical characteristics and section lengths is difficult to achieve, and that the advantages of this invention can be achieved so long as

$$\sum_i \Delta k_i h_i$$

is maintained in the range of about $2\pi N$: that is between $2\pi N+\delta$ and $2\pi N-\delta$ where $\delta$ is less than $2\pi/M$ where M is the total number of optical conversion segments over the entire wavelength conversion path. An approach to designing wavelength conversion paths to achieve this balance is to actually calculate the $\Delta k$ and section length for each section. In this approach, an advantageous balance is considered to occur when the sum over the entire wavelength conversion path of the products of the $\Delta k$ of each section with the length for that section is about $2\pi N$. Preferably the resulting total of said product is between $2\pi N+1.5\pi/M$ and $2\pi N-1.5\pi/M$, and most preferably is between $2\pi N+\pi/M$ and $2\pi N-\pi/M$.

As a practical matter, in many cases because of limitations on the precision associated with preparing a series of sections for use in this invention (including preparing the optical materials themselves) one may wish to confirm that the desired balance or the $\Delta k$'s and section lengths have been achieved by observing that the overall coherence length over the entire wavelength conversion path is greater than the length of said path. In some cases, one can observe the overall coherence length directly from examination of the weak scattering of waves along the length of the wavelength conversion path.

For example, in a section wherein two beams of incident optical waves having respective frequencies $\omega_1$ and $\omega_2$ and respective wavelengths $\lambda_1$ and $\lambda_2$ are directed through a medium (e.g., a crystal or a composite material) having a length $h_i$ and having a refractive index $n_i(\omega)$ which varies as a function of the optical wave frequency, to generate optical waves having a frequency $\omega_3$ and a wavelength $\lambda_3$, a beam propagation constant k is defined for each wave beam as equal to $2\pi n(\omega)/\lambda$ and a $\Delta k_i$ for the section is represented by the relationship:

$$\Delta k_i = \frac{2\pi n_i(\omega_3)}{\lambda_3} - \frac{2\pi n_i(\omega_1)}{\lambda_1} - \frac{2\pi n_i(\omega_2)}{\lambda_2} .$$

In accordance with the process of this invention, the incident optical waves of such wavelength conversion systems (having frequencies $\omega_1$ and $\omega_2$) are directed through a series of sections selected such that the sum of $h_i \Delta k_i$ for the series is equal to about $2\pi N$ where N is an integer other than zero. The optical conversion segments for optical articles using such wavelength conversion systems consisting of a series of sections selected such that the sum of $h_i \Delta k_i$ for the series is about $2\pi N$.

In the case of second harmonic generation, $\omega_1$ and $\omega_2$ are equal and are each one-half of $\omega_3$. Accordingly, for second harmonic generation, the $\Delta k_i$ for each section may be represented by the relationship:

$$\Delta k_i = \frac{2\pi}{\lambda_3} \left( n(\omega_3) - n(\omega_1) \right) .$$

Alternatively, in a section where a beam of incident optical waves having a frequency $\omega_4$ and wavelength $\lambda_4$ is directed through a medium having a length $h_i$ and having a refractive index $n_i(\omega)$ which varies as a function of the optical wave frequency, to generate two beams of optical waves having respective frequencies $\omega_5$ and $\omega_6$, and respective wavelengths $\lambda_5$ and $\lambda_6$, a beam propagation constant $k_i$ is defined for each wave beam as equal to $2\pi n_i(\omega)/\lambda$, and a $\Delta k_i$ for that section is represented by the relationship:

$$\Delta k_i = \frac{2\pi n_i(\omega_6)}{\lambda_6} + \frac{2\pi n_i(\omega_5)}{\lambda_5} - \frac{2\pi n_i(\omega_4)}{\lambda_4} .$$

In accordance with the process of this invention, the incident optical waves of such wavelength conversion systems (having frequency $\omega_4$) are directed through a series of sections such that the sum of $h_i \Delta k_i$ for the series is equal to about $2\pi N$ where N is an integer other than zero. The optical conversion segments for optical articles using such wavelength conversion systems consist of a series of sections selected such that the sum of $h_i \Delta k_i$ for the series is about $2\pi N$.

In any case, the nonlinear optical coefficient of at least one section in the series must be changed relative to the nonlinear optical coefficient of an adjacent section.

For certain embodiments of this invention the p sections of optical materials may be characterized as q pairs of adjacent sections of optical materials, $m_1$ and $m_2$, $m_3$ and $m_4$, ...$m_{i-1}$ and $m_i$, ...$m_{2q-1}$ and $m_{2q}$ (i.e., p = 2q) each section being characterized by corresponding lengths, $h_1$, $h_2$, ...$h_i$, ...$h_{2q}$, corresponding refractive indices, $n_1$, $n_2$, ....$n_i$, ...$n_{2q}$, corresponding propagation constants associated with each wavelength of the wavelength conversion system, $k_1$, $k_2$, .... $k_i$, ...$k_p$, and the materials are selected so that for each pair of sections of material $m_{i-1}$ and $m_i$ the axis of polarization is reversed.

For maximum second harmonic generation, N should be equal to 1, the number of sections per segment should be equal to 2, and the length of each section should be equal to one half its respective coherence length (i.e., $h_1 = \pi/\Delta k_1$ and $h_2 = \pi/\Delta k_2$). In general the lengths, $h_i$, can each be different and are each in the range of 0.25 μm to 50 μm. In practice the ratio of adjacent section length, (i.e., $h_{i-1}:h_i$) is usually in the range of 1:20 to 20:1. The width of each section can range from 0.2 μm to 50 μm and is preferably within the range of from 1 μm to 20 μm, and most preferably within the range of from 2 μm to 10 μm. The depth of each section can range from 0.1 μm to 50 μm and is preferably within the range of from 1 μm to 20 μm, and most preferably within the range of from 2 μm to 10 μm. Preferably there is at least about 1% difference between the nonlinear optical coefficient for at least one section and the nonlinear optical coefficient for at least one adjacent section.

Preferred substrate materials are single crystal materials having the formula $KTiOMO_4$ where M is P or As. Single crystal material of the formula $KTiOMO_4$ which is considered useful as a substrate material in the practice of this invention can be prepared by any method which provides a crystal of optical quality. Common methods of crystal growth include hydrothermal processes and flux processes. U.S. Patent No. 4,305,778 discloses a suitable hydrothermal process for growing single crystals of $KTiOMO_4$ which involves using as a mineralizing solution an aqueous solution of a glass defined by specified portions of the ternary diagrams for the selected $K_2O/M_2O_5/(TiO_2)_2$ system. U.S. Patent No. 4,231,838 discloses a suitable flux growth process for growing single crystals of $KTiOMO_4$ comprising heating selected starting ingredients, chosen to be within the region of a ternary phase diagram in which the desired crystal product is the only stable solid phase, and then controllably cooling to crystallize the desired product. When utilizing single crystals of $KTiOMO_4$ to prepare optical articles in accordance with the teachings of this invention, one can use hydrothermally grown or flux grown crystals. However, it is generally recognized that ion exchange is more difficult in hydrothermally grown crystals; and accordingly molten salt with comparatively higher levels of divalent cation (e.g., $Ba^{++}$) is often more suitable for ion exchange when hydrothermally grown $KTiOMO_4$ crystals are used.

Generally phase matching is of two types: Type I, where the two incident optical waves have the same polarizations; and Type II where the two incident optical waves have orthogonal polarizations. For bulk crystalline $KTiOPO_4$, Type I phase matching gives low conversion efficiencies compared to Type II. Furthermore, in spite of better conversion efficiencies via Type II for bulk crystalline $KTiOPO_4$, phase matching can only be achieved for input wavelengths greater than about 1 μm.

Utilizing an optical article constructed in accordance with this invention allows for a Type I phase matching where the input and output waves are polarized along the polar or c-axis of the crystal and where the nonlinear optical coefficient is about 2 times that of the conventionally used Type II process. Since the second harmonic conversion efficiency is proportional to the square of the nonlinear optical coefficient, the use of the instant invention will provide optical articles that have conversion efficiencies that are about 4 times those for the conventional Type II process. In some Type I embodiments, however, the input polarization is normal to the polar or c-axis and the output polarization is along the polar or c-axis. Furthermore, for the quasi phase matching provided by the optical article of the instant invention, both Type I and Type II phase matching can be achieved over the entire transparency range in $KTiOPO_4$ (350 nm to 4.5 μm) and in $KTiOAsO_4$ (350 nm to 5.5 μm).

For waveguides, the number of sections provided can depend on such factors as the optical materials used and the waveguide length. A range of about 400 to 1000 sections can be provided in a typical 5.0 mm long waveguide. Longer waveguides can have up to 10,000 sections, or even more. However, articles comprising optical conversion segments of only two sections are also considered to be within the scope of this invention.

The invention may be employed for waveguide structures, and for mixed guided and unguided wave systems. In mixed systems, each unguided length in the wave propagation direction should be less than the defocusing length of the wave in the material to minimize radiation losses between the guide sections.

The instant invention may be used to improve an optical waveguide device comprising at least one channel waveguide, means to couple an incoming optical wave into said channel waveguide and means to couple an optical outgoing optical wave out of said channel waveguide. The device is improved by using an article in accordance with this invention as the waveguide therein.

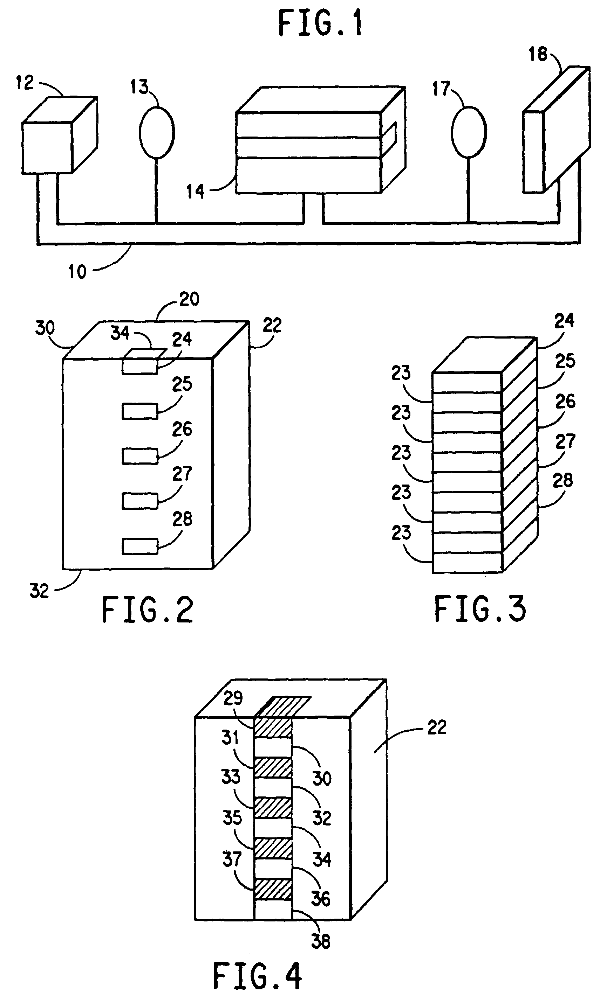

Employment of the instant invention is illustrated by reference to the apparatus (10) shown in Figure 1 wherein optical waves emitted by laser (12) at one wavelength may be used to generate waves at another wavelength. Lens (13) is used to focus the optical waves emitted by laser (12) into a waveguide (14) constructed in accordance with this invention. Wavelength conversion occurs within the waveguide (14) and a second lens (17) is provided to collimate the optical waves emerging from the waveguide. A filter (18) is provided in the arrangement shown to filter out the remaining optical waves which have the wavelength of the emitted incident waves, while allowing the optical waves of the desired wavelength which were generated within the waveguide (14) to pass through. Thus, for example, if laser (12) is a Ti:Al$_2$O$_3$ laser used to generate polarized light at wavelength 0.8 μm, and the waveguide (14) is constructed in accordance with this invention for second harmonic generation using such incident light, the filter (18) would be adapted to allow optical waves of wavelength 0.4 μm to pass through while optical waves of wavelength 0.8 μm are filtered from the collimated beam which emerges from the waveguide. A device incorporating the apparatus of Figure 1 (i.e. the laser (12), the waveguide (14), the filter (18), and the lenses (13) and (17) is considered to be an article within the scope of this invention. Indeed, waveguides such as waveguide (14) are themselves considered to be articles within the scope of the invention.

One embodiment of a waveguide of the instant invention is shown by the waveguide for second harmonic generation illustrated at (20) in Figure 2. The waveguide (20) as shown comprises a block (22) of single crystal KTiOMO$_4$ (M is P or As) having sections (24), (25), (26), (27) and (28), all of another crystalline material of the formula K$_{1-x}$Rb$_x$TiOMO$_4$ where x is from 0 to 1 wherein the cations of said formula have been partially replaced by at least one of Rb$^+$, Tl$^+$ and Cs$^+$ and at least one of Ba$^{++}$, Sr$^{++}$ and Ca$^{++}$. The sections (24), (25), (26), (27) and (28) are aligned between the top of the article (30) and the bottom of the article (32), such that said sections along with the portions of block (22) aligned therewith comprise a waveguide. The waveguide is designed so that during operation, incident beams of optical waves enter the waveguide at the upper surface (34) of section (24) at the top (30) of the article (20). The incident beams are aligned so that optical waves pass through each of the sections (24), (25), (26), (27) and (28) as well as sections represented by the portions of block (22) in alignment with said sections, and then exit from the bottom (32) of block (22).

Accordingly, as further illustrated by Figure 3, the waveguide embodied by Figure 2 is designed so that beams passing therethrough, pass through a number of sections comprised of one material represented by blocks (24), (25), (26), (27) and (28), and an equal number of sections comprised of another material represented by (23), the portions at block (22) in alignment therewith.

A means of preparing a channel waveguide of the type illustrated in Figures 2 and 3 in accordance with this invention is to modify the single crystal substrate of the formula K$_{1-x}$Rb$_x$TiOMO$_4$, wherein X is from 0 to 1 and M is P or As. Use of these substrates for producing channel waveguides is well known in the art, and reference is made to U.S. Patent No. 4,766,954 which is hereby incorporated herein in its entirety. A typical substrate for use in producing waveguides is a crystal of KTiOPO$_4$ (i.e., "KTP").

As described in U.S. Patent No. 4,766,954, the use of substrate masking allows replacement of cations of one optically smooth surface by ions selected from at least one of Rb$^+$ and Cs$^+$ and Tl$^+$ and a resulting change in the surface index of refraction with respect to the index at refraction of the starting substrate. In accordance with the instant invention, the cations are also partially replaced by ions selected from at least one of Ba$^{++}$, Sr$^{++}$ and Ca$^{++}$, and the areas along the portion of the crystal substrate surface used for forming the desired channel may be alternately masked and unmasked during cation replacement so that the resulting channel consists of a series of aligned sections which alternate between original substrate and substrate material in which cations have been replaced by at least one of Rb$^+$, Tl$^+$ and Cs$^+$ and by at least one of Ba$^{++}$, Sr$^{++}$ and Ca$^{++}$ (with the proviso that when x is greater than 0.8, cations have been replaced by at least one of Tl$^+$ and Cs$^+$ and at least one of Ba$^{++}$, Sr$^{++}$ and Ca$^{++}$). Preferably the cations of the substrate are replaced by Ba$^{++}$ and at least one of Tl$^+$ and Rb$^+$ to insure change in nonlinear optical coefficient in adjacent sections. Standard photolithographic techniques may be used to provide the desired masking. For example, a mask of protective material (e.g., Ti) may be applied over the z-surface of the crystal substrate with a pattern generated therein to allow, upon suitable exposure to a molten salt, formation of sections of a second optical material by cation exchange. After cation replacement the remaining protective material may be removed.

In the case of this invention the substrate of choice is KTiOMO$_4$, where M is P or As, and preferably P, and the substrate is masked on the z-surface thereof, which can be determined by conventional x-ray crystallographic techniques. Preferably there is sufficient cation replacement to change the nonlinear optical coefficient by at least 1% with respect to the nonlinear optical coefficient of the substrate.

One process for preparing a channel waveguide for a wavelength conversion system in accordance with this invention comprises the steps of: (1) providing the z-surface of a z-cut substrate of single crystal material having the formula K$_{1-x}$Rb$_x$TiOMO$_4$ wherein x is from zero to one and M is P or As, with an optically smooth surface; (2) providing a molten salt containing cations selected from the group consisting of Rb$^+$, Cs$^+$ and Tl$^+$ and cations selected from the group consisting of Ba$^{++}$, Sr$^{++}$ and Ca$^{++}$ (with the proviso that when x is greater than 0.8, the molten salt contains cations selected from Tl$^+$ and Cs$^+$), in an amount effective to provide upon exposure to said optically smooth surface at a selected temperature for a selected time, sufficient cation replacement to change the index of refraction with respect to the index of refraction of said substrate and to provide a nonlinear optical coefficient which is changed with respect to the nonlinear optical coefficient of the substrate; (3) applying a masking material on said substrate to provide a pattern of aligned areas along a portion of said optically smooth surface which are alternately masked with a material resistant to said molten salt and unmasked; (4) immersing said masked substrate in said molten salt at said selected temperature for said selected time, thereby providing cation replacement in said unmasked areas; (5) removing the masking material from said substrate; and (6) finishing said substrate to provide a clean waveguide with polished waveguide input and output faces. In this process the length of said masked and unmasked areas is selected such that after said cation replacement in the unmasked areas, a channel waveguide is provided at said portion of the optically smooth surface which comprises at least one optical conversion segment consisting of a series of aligned sections of nonlinear optical materials within a crystal; and such that the sum for the series of section of the product of the length of each section and the $\Delta k$ for that section is equal to about $2\pi N$ where N is an integer other than zero; wherein the $\Delta k$ for each section is the difference between the sum of the propagation constants for the incident waves for the wavelength conversion system in that section and the sum of the propagation constant for the generated waves for said wavelength conversion system in that section. The divalent cations and the monovalent cations can alternatively be exchanged in separate steps.

KTP substrates may be provided in accordance with step (1) by cutting the substrate into z plates and polishing a 1 mm thick z-cut substrate. Preferably the molten salt provided in step (2) contains $Ba^{++}$ together with $Tl^+$, $Rb^+$ or both $Tl^+$ and $Rb^+$. A masking of Ti may be provided in accordance with step (3) in conformance with standard photolithographic techniques by sequentially applying Ti on the substrate; applying a photoresist material over the Ti and curing the photoresist; providing a photomask having the desired pattern and contact exposing the photoresist through the photomask; removing the exposed portion of the photoresist; and etching away the Ti beneath the removed photoresist; and removing the unexposed photoresist, so that the patterned Ti masking remains. Typically, the substrate will be end polished before it is immersed in the molten salt; and washed after removal of the salt. After the Ti mask is removed, the waveguide may be suitably mounted so that a laser beam may be directed therein. Preferably the cation exchange provides a change in the surface index at refraction so that there is at least about 0.00025 difference between the surface index of refraction of at least one section (e.g., the cation exchanged sections) and the surface index of refraction of at least one adjacent section (e.g., the substrate).

It should be recognized that the $\Delta k$ for each section in which cations have been exchanged in accordance with this process for waveguide preparation can be varied somewhat by changing the section width and/or depth, and may also vary somewhat as a function of replacement ion type and concentration. Accordingly, one may wish to prepare a number of waveguides having various widths, etc. to determine optimum design for a particular wavelength conversion system using particular materials.

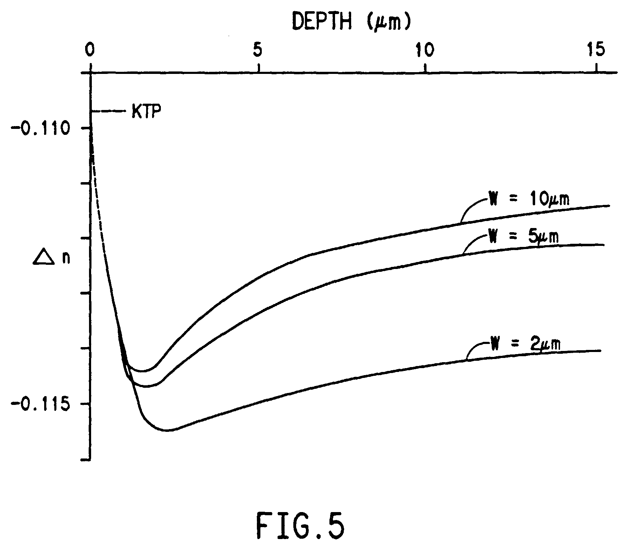

To further illustrate the processing latitude afforded by this invention and the relationship between waveguide depth and refractive index mismatch, $\Delta n$, one skilled in the art can calculate the refractive index mismatch, i.e., $\Delta n$, for Type I second harmonic generation in $KTiOPO_4$ (KTP) with y-propagation (i.e., $\Delta n = n_z(\omega) - n_z(2\omega)$ where $n_z(\omega)$ and $n_z(2\omega)$ are respectively the effective refractive indexes of the incident and generated optical wave of frequency and $\omega$ and $2\omega$ for z polarization) as a function of guide depth for a waveguide of various waveguide widths using the methods described in M. J. Adams, "An Introduction to Optical Waveguides", (John Wiley & Sons, NY 1981). Using this approach the effective mode indices for the lowest order spatial modes at $\lambda = 0.420$ and $0.840\ \mu m$ were calculated. In the calculation, an exponential index profile in the depth direction was assumed. The refractive indices used for KTP are $n_z = 1.8410$ at $\lambda = 0.840\ \mu m$ and $n_z = 1.946$ at $\lambda = 0.420\ \mu m$, as disclosed in J. D. Bierlein and H. Vanherzeele, J. Opt. Soc. Am., B, 6, 622-633 (1989). For planar Rb-exchanged waveguides the surface index has been measured to be $n_z = 1.8610$ at $\lambda = 0.840\ \mu m$ and $n_z = 1.966$ at $\lambda = 0.420\ \mu m$. The result of the calculation is shown in Figure 5. At zero waveguide depth, the $\Delta n$ equals the bulk KTP substrate value. The corresponding coherence length is $4\ \mu m$. For the Rb-exchanged guides, at infinite depth the $\Delta n$ would correspond to that for bulk $RbT_iOPO_4$ (RTP). A minimum occurs in the 1 to 3 $\mu m$ depth range.

Figure 5 illustrates the practical advantage of using waveguides segmented in accordance with the teachings of this invention relative to uniform waveguides for achieving phase matching for second harmonic generation. Since a minimum occurs in the $\Delta n$ vs. depth curve, near this minimum very little change in $\Delta n$ is expected with changes in processing conditions, such as exchange time or temperature, which change guide depth. Selecting this minimum, phase matching is achieved by adjusting the length of each section of the optical conversion segment such that $h_1\Delta n_1 + h_2\Delta n_2$ is about equal to $N2\pi$. In contrast, for other waveguide depths, a small processing change affecting waveguide depth will give a larger change in $\Delta n$ and, hence, processing latitude will be narrower.

Utilization of the z-surface of the single crystal substrate of choice, specifically $KTiOPO_4$, and cation replacement using $Ba^{++}$ together with $Tl^+$, $Rb^+$ or both $Tl^+$ and $Rb^+$ are preferable in the practice of this invention to enhance the achievement of a change in nonlinear optical coefficient of adjacent sections. Prior to masking and cation exchange thereon, the z-surface of the single crystal substrate can be determined by conventional x-ray crystallographic techniques, as stated above. Where the change in nonlinear optical coefficient is attributable to reversed polarization, observation of reversed polarization can be made by etching the optical article, or more particularly, the optical conversion segment or segments thereof, or by surface SHG (second harmonic generation) technologies. For example, liquid electrostatic toner may be used to preferentially tone either the cation exchanged section of the optical conversion segment or the unexchanged section.

A further embodiment of an optical article in accordance with the instant invention in the form of a waveguide is illustrated in Figure 4. A single crystal of $KTiOPO_4$ (22) has a plurality of aligned sections (29), (31), (33), (35) and (37) of the formula $K_{1-x}Rb_xTiOPO_4$, wherein x is less than 1 and greater than 0, alternating with a plurality of aligned sections (30), (32), (34), (36) and (38) of the formula $K_{1-x}Rb_xTiOPO_4$, wherein x is less than 1 and greater than or equal to 0 and wherein the cations are partially substituted with $Tl^+$ and partially substituted with $Ba^{++}$. In this embodiment the cation substitution in the $KTiOPO_4$ substrate in the manner shown insures substantially complete guidance of the wave on the optical path through the waveguide.

Practice of the invention will become further apparent from the following non-limiting Examples.

EXAMPLES

To determine polarization reversal in the waveguides prepared in the Examples which follow, each waveguide was secured to the bottom of a petri dish using a commercially available grease (Apiezon N grease). The dish was then dipped into a dry ice-acetone bath for about 4 seconds, and a few drops of high resolution electrostatic toner was applied to the waveguide. The toners used are electrically charged micron sized particles suspended in isopar. A suitable positively charged commercially available toner is James River Graphics T8718. A suitable negatively charged commercially available toner is Savin black toner, commonly used in the Savin 7300 copier. In either case the solids content of the toner was adjusted to approximately 0.1 to 1% by weight, based on the total weight of solids and isopar.

EXAMPLE 1

A hydrothermally grown crystal of $KTiOPO_4$ was first cut into approximately 1 mm thick z-plates. Then the z-surface was polished and coated with about 1000 Å of Ti by thermal evaporation. A photoresist was then contact exposed through a photomask containing the desired waveguide patterns. The exposed photoresist was removed and the Ti coating revealed beneath the removed photoresist was chemically etched using a solution of ethylene diamine tetraacetic acid (EDTA), $H_2O_2$ and $NH_4OH$ so that the $KTiOPO_4$ substrate was selectively revealed. The remaining photoresist was then removed and the Ti-masked substrates were end polished.

A series of waveguide patterns were generated in the Ti mask for the purposes of allowing preparation of Rb/Tl/Ba-exchanged waveguide sections alternatively with section of bulk $KTiOPO_4$. The masked substrates provided 36 different waveguide patterns having in the order about 400 to 1000 sections. These patterns consisted of open areas with widths that vary in 1 μm step from 4 to 9 μm and, in the beam propagation direction, again in 1 μm step lengths ranging from 3 to 6 μm. The waveguides were oriented for x propagation in the $KTiOPO_4$.

The masked substrates were polished to give a total guide length of approximately 5 mm and ion exchanged in a molten salt bath consisting of 1 mole % $BaNO_3$, 95 mole % $RbNO_3$, and 4 mole % $TlNO_3$, at a temperature of 360°C for an exchange time of 1 hour. After the exchange time had elapsed, the substrate was cooled to room temperature and the Ti mask was removed.

The second harmonic generation conversion efficiency was measured using endfire coupling of a dye laser through a microscope objective. The wavelength of this laser was varied from about 850 nm to 970 nm and the second harmonic output observed. Type I phase matched second harmonic generation output (i.e., phase matching wherein the two incident waves have the same polarization) at 0.407 μm was observed for a guide period of 4 μm and a guide width of 5 μm and for a guide period of 5 μm the phase matched output was at 0.43 μm. In both cases a second harmonic conversion efficiency of about $0.02\%/W\text{-}cm^2$ was observed.

EXAMPLE 2

The procedure of Example 1 was followed except that the crystal of $KTiOPO_4$ was flux grown and a $Ti:Al_2O_3$ laser was used to measure the second harmonic generation conversion efficiencies.

Type I phase matched second harmonic generation output (i.e., phase matching wherein the two incident waves have the same polarization) at 0.43 μm was observed for a guide period of 4 μm and a guide width of 5 μm having a second harmonic conversion efficiency of about $50\%/W\text{-}cm^2$. For a guide period of 5 μm the phase matched output was at 0.45 μm and for a guide of 6 μm the phase matched output was at 0.48 μm, both with a second harmonic conversion efficiency of about $50\%/W\text{-}cm^2$.

EXAMPLE 3

A flux grown crystal of $KTiOPO_4$ was cut, polished, masked, processed and evaluated using a procedure generally in accordance with the procedure of Example 2, except that the exchange time was 45 minutes. Type I phase matched second harmonic generation of 0.85 µm input was observed for a guide width of 5 µm and a guide period of 4 µm with a second harmonic conversion efficiency of about 50%/W-cm$^2$.

## EXAMPLE 4

A flux grown crystal was cut, polished, masked, processed and evaluated in accordance with Example 2, except that this sample was ion-exchanged in a molten salt bath comprised of 1 mole % Ba(NO$_3$)$_2$, 99 mole % RbNO$_3$ for 30 minutes at 360°C. After the treatment, the substrate was cooled to room temperature and the Ti mask was removed. With the Ti:Al$_2$O$_3$ laser, Type I phase matching was observed for a guide period of 3 µm and a guide width of 5 µm. Conversion was from $\lambda = 0.79$ µm to $\lambda = 0.395$ µm and the second harmonic conversion efficiency was about 40%/W-cm$^2$. For a guide period of 4 µm and a guide width of 5 µm, the second harmonic conversion was from $\lambda = 0.85$ µm to $\lambda = 0.425$ µm, with an efficiency of about 20%/W-cm$^2$.

## EXAMPLE 5

The procedure of Example 1 was followed except that a molten salt bath consisting of 5 mole % BaNO$_3$ and 95 mole % RbNO$_3$ was utilized; the waveguides were oriented for y propagation in the KTiOPO$_4$; and a diode laser at a wavelength of 850 nm was used to measure the second harmonic conversion efficiency.

Type I phase matched second harmonic generation output at 0.425 µm was observed for a guide width of 6 µm and a guide period of 4 µm with a second harmonic conversion efficiency of about 3%/W-cm$^2$.

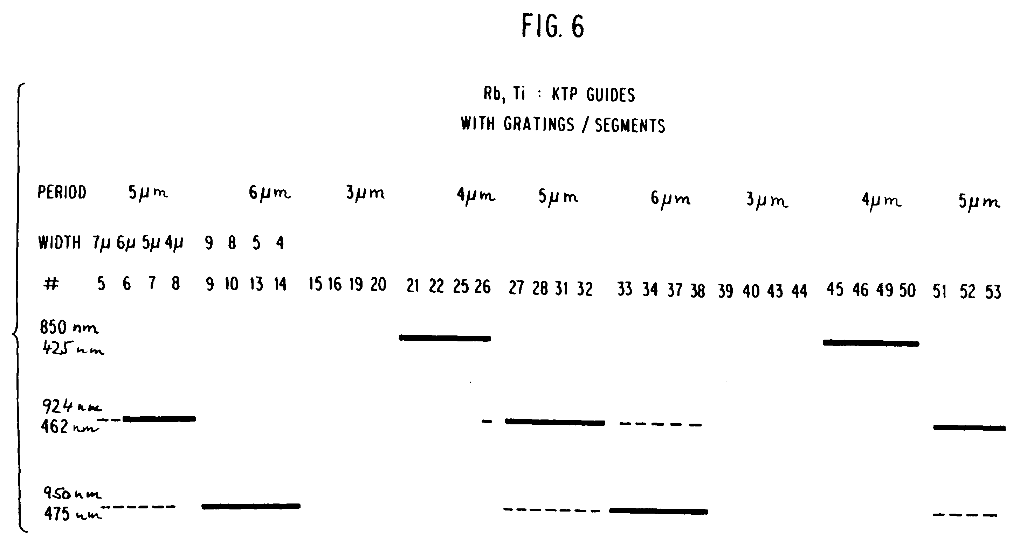

Figure 6 illustrates the correlation between the wavelength of the light that is to be converted and the period of the Rb, Tl doped KTP waveguide. The tested waveguide was supplied with channels of varying periods and widths. The top row represents the period in micrometers (µm) of the gratings/segments. The left hand column shows the wavelength in nanometers (nm) of the input (top figure) and the output (bottom figure) light. The second row indicates the width of the channels tested. The row label # indicates the sequential number of the channel tested. In the graph the solid lines indicate strong second harmonic generation and the dotted lines indicate weak second harmonic generation. As can be seen the 4 µm period channels were effective to generate 425 nm light from 850 nm input light. The 5 µm period channels were effective at generating 462 nm light from 924 nm input light and the 6 µm period channels generated 475 nm output light, from 950 nm input light.

The results show that efficient second harmonic generation occurs in Rb, Tl KTP waveguides which are periodically modulated to obtain phase matching. The efficiency of the guides may be further increased by a variety of techniques including optimization of the index step, geometry profile, and orientation of the unit cells making up the waveguide structure. Other factors in this consideration include mode beating in multimode configurations and Fabry-Perot like resonances in the unit cells.

Particular embodiments of the invention are included in the examples. Other embodiments will become apparent to those skilled in the art from a consideration of the specification or practice of the invention disclosed herein. It is understood that modifications and variations may be practical without departing from the scope of the novel concepts of this invention. It is further understood that the invention is not confined to the particular formulations and examples herein illustrated, but it embraces such modified forms thereof as come within the scope of the following claims.

## Claims

1. A process for wavelength conversion comprising the step of directing the incident optical waves for wavelength conversion through a single crystal (22) containing a series of aligned sections (24 to 28) of optical materials for wavelength conversion selected from (a) materials having the formula $K_{1-x}Rb_xTiOMO_4$ where $\underline{x}$ is from one to zero and $\underline{M}$ is selected from P and As and (b) materials of said formula wherein the cations of the formula have been partially replaced by at least one of Rb$^+$, Tl$^+$ and Cs$^+$, and at least one of Ba$^{++}$, Sr$^{++}$ and Ca$^{++}$, with the provisos that at least one section is of optical materials selected from (b) and that for optical materials selected from (b) wherein $\underline{x}$ is greater than 0.8, the cations of the formula are partially replaced by at least one of Tl$^+$ and Cs$^+$ and at least one of Ba$^{++}$, Sr$^{++}$ and Ca$^{++}$, the sections being selected such that the sum for the series of sections of the product of the length of each section in the direction of alignment and the $\Delta k$ for that section is equal to about $2\pi N$, where $\underline{N}$ is an integer other than zero, and such that the non-linear optical coefficient of at least one section is changed relative to the non-linear optical coefficient of at least one adjacent section; wherein the $\Delta k$ for each section is the difference between the sum of the propagation constants for the incident waves for the wavelength conversion system in that section and the sum of the propagation constants for the generated waves for the wavelength conversion system in that section.

2. The process according to claim 1,

wherein incident waves of frequencies $\omega_1$ and $\omega_2$ are used to generate waves of frequency $\omega_3$; and wherein $\omega_3$ is equal to the sum of $\omega_1$ and $\omega_2$.

3. The process according to claim 1,

wherein incident waves of frequency $\omega_4$ are used to generate waves of frequencies $\omega_5$ and $\omega_6$; and wherein $\omega_4$ is equal to the sum of $\omega_5$ and $\omega_6$.

4. The process according to any of claims 1 to 3, wherein second harmonic waves of the incident optical waves are generated.

5. The process according to any of claims 1 to 4, wherein

   - the length of each section is in the range of 0.25 $\mu$ to 50 $\mu$m;
   - the width of each section is in the range of 0.2 $\mu$m to 50 $\mu$m and
   - the depth of each cation exchanged section is in the range of 0.1 $\mu$m to 50 $\mu$m.

6. The process according to any of claims 1 to 5, in which for efficiently generating blue light light having wavelengths in the range of 775 to 950 nm is used as incident optical wave and wherein periodically segmented non-linear optical KTP has a waveguide structure (14, 20) having a periodicity of 3 to 6 $\mu$m.

7. The process according to any of claims 1 to 5, which for obtaining Type I harmonic frequency generation comprises the following steps:

   - providing the periodically segmented non-linear optical KTP in form of a waveguide (14, 20) and
   - applying TM polarized light as incident optical waves to the non-linear optical KTP waveguide.

8. The process according to claim 6 or 7, wherein the KTP waveguide is doped with at least one Rb and Tl.

9. An optical article for use in a wavelength conversion system, the optical article comprising at least one optical conversion segment consisting of a single crystal (22) containing a series of aligned sections (24 to 28) of optical materials selected from (a) materials having the formula $K_{1-x}Rb_xTiOMO_4$ where $\underline{x}$ is from zero to one and $\underline{M}$ is selected from P and As and (b) materials of said formula wherein the cations of the formula have been partially replaced by at least one of $Rb^+$, $Tl^+$ and $Cs^+$, and at least one of $Ba^{++}$, $Sr^{++}$ and $Ca^{++}$, with the provisos that at least one section is of optical materials selected from (b) and that for optical materials selected from (b) wherein $\underline{x}$ is greater than 0.8, the cations of the formula are partially replaced by at least one of $Tl^+$ and $Cs^+$ and at least one of $Ba^{++}$, $Sr^{++}$ and $Ca^{++}$, wherein the sections are selected so that the sum of the product of the length of each section in the direction of alignment and the $\Delta k$ for that section is equal to about $2\pi N$ where $\underline{N}$ is an integer other than zero, and so that the non-linear optical coefficient of at least one section is changed relative to the non-linear optical coefficient of at least one adjacent section; wherein the $\Delta k$ for each section is the difference between the sum of the propagation constants for the incident waves for the wavelength conversion system in that section and the sum of the propagation constants for the generated waves for the wavelength conversion system in that section.

10. The article according to claim 9, which comprises alternating sections of $KTiOPO_4$ and $KTiOPO_4$ wherein the cations have been partially replaced by $Ba^{++}$, and at least one of $Tl^+$ and $Rb^+$.

11. The article according to claim 9 or 10, wherein

   - the length of each section is in the range of 0.25 $\mu$m to 50 $\mu$m,
   - the width of each section is in the range of about 0.2 $\mu$m to 50 $\mu$m, and
   - the depth of each cation exchanged section is within the range of about 0.1 $\mu$m to 50 $\mu$m.

**12.** The article according to any of claims 9 to 11,

which is a waveguide comprising alternating sections of a crystalline substrate having the formula $K_{1-x}Rb_xTiOMO_4$ wherein $\underline{x}$ is from zero to one and $\underline{M}$ is P or As, and sections of substrate material in which the cations of the substrate have been replaced by sufficient cations selected from the group consisting of $Rb^+$, $Cs^+$ and $Tl^+$ and sufficient cations selected from the group consisting of $Ba^{++}$, $Sr^{++}$ and $Ca^{++}$ to change the non-linear optical coefficient by at least 1% with respect to the non-linear optical coefficient of the substrate.

**13.** The article according to any of claims 9 to 12,

wherein there is at least about 1% difference between the non-linear optical coefficient for at least one section and the non-linear optical coefficient for at least one adjacent section; and
wherein there is at least about 0.00025 difference between the surface index of refraction of the at least one section and the surface index of refraction of the at least one adjacent section.

**14.** The article according to any of claims 9 to 13
for generating the harmonic frequency of light comprising a non-linear optical KTP waveguide structure having a channel of alternating regions with differing linear and non-linear indices of refraction with a periodicity of 3 to 6 μm in combination with means for injecting light with a wavelength in the range of 775 to 950 nm into the channel.

**15.** The article according to any of claims 9 to 13
for obtaining Type I harmonic frequency generation of a source of input light wherein

the periodically segmented non-linear optical KTP has a waveguide structure (14, 20) and the article further comprises
means for polarizing the input light so that its direction of polarization is perpendicular to the surface of the segmented periodic non-linear optical KTP waveguide.

**16.** The article according to claim 14 or 15,
wherein the KTP waveguide is doped with at least one of Rb and Tl.

**17.** An optical waveguide device comprising

- at least one channel waveguide (14, 20),
- means (13) to couple an incoming optical wave into the channel waveguide and
- means (17) to couple an outgoing wave out of the channel waveguide,

wherein the channel waveguide is an optical article as provided in any of claims 9 to 13.

**18.** A process for preparing a channel waveguide for a wavelength conversion system comprising the following steps:

(a) providing the z-cut surface of a z-cut substrate (22) of single crystal material having the formula $K_{1-x}Rb_xTiOMO_4$ wherein $\underline{x}$ is from zero to one and $\underline{M}$ is P or As with an optically smooth surface;
(b) providing a molten salt containing cations selected from the group consisting of $Rb^+$, $Cs^+$ and $Tl^+$ and cations selected from the group consisting of $Ba^{++}$, $Sr^{++}$ and $Ca^{++}$ with the proviso that when $\underline{x}$ is greater than 0.8, the molten salt contains cations selected from $Tl^+$ and $Cs^+$ and at least one of $Ba^{++}$, $Sr^{++}$ and $Ca^{++}$, in an amount effective to provide upon exposure to the optically smooth surface at a selected temperature for a selected time, sufficient cation replacement to change the index of refraction with respect to the index of refraction of the substrate and to provide a non-linear optical coefficient which is changed with respect to the non-linear optical coefficient of the substrate;
(c) applying a masking material on the substrate to provide a pattern of aligned areas along a portion of the optically smooth surface which are alternately masked with a material resistant to the molten salt and unmasked;
(d) immersing the masked substrate in the molten salt at the selected temperature for the selected time, thereby providing cation replacement in the unmasked areas;
(e) removing the masking material from the substrate; and
(f) finishing the substrate to provide a clean waveguide with polished waveguide input and output faces;

wherein the length of the masked and unmasked areas is selected such that after the cation replacement in the unmasked areas, a channel waveguide (14, 20) is provided at the portion of the optically smooth surface which comprises at least one optical conversion segment consisting of a series of aligned sections (24 to 28) of non-linear optical materials within a crystal; and

such that the sum for the series of sections of the product of the length of each section and the $\Delta k$ for that section is equal to about $2\pi N$ where $\underline{N}$ is an integer other than zero; wherein the $\Delta k$ for each section is the difference between the sum of the propagation constants for the incident waves for the wavelength conversion system in that section and the sum of the propagation constants for the generated waves for the wavelength conversion system in that section.

**Patentansprüche**

1. Verfahren zur Wellenlängenumwandlung, das den Schritt aufweist, die einfallenden optischen Wellen zur Wellenlängenumwandlung durch einen Einkristall (22) zu richten, der eine Reihe von ausgefluchteten Abschnitten (24 bis 28) aus optischen Materialien zur Wellenlängenumwandlung enthält, die ausgewählt sind aus (a) Materialien gemäß der Formel $K_{1-x}Rb_xTiOMO_4$ , wobei $\underline{x}$ Werte von Eins bis Null hat und wobei $\underline{M}$ aus P und As gewählt ist, und (b) Materialien der genannten Formel, wobei die Kationen der Formel teilweise ersetzt worden sind durch zumindest eines von $Rb^+$, $Tl^+$ und $Cs^+$, und mindestens eines von $Ba^{++}$, $Sr^{++}$ und $Ca^{++}$, mit der Maßgabe, daß mindestens ein Abschnitt aus optischen Materialien besteht, die aus (b) gewählt sind, und daß bei optischen Materialien, die aus (b) gewählt sind, wobei $\underline{x}$ größer als 0,8 ist, die Kationen der Formel teilweise ersetzt sind durch mindestens eines von $Tl^+$ und $Cs^+$ und mindestens eines von $Ba^{++}$, $Sr^{++}$ und $Ca^{++}$, wobei die Abschnitte so gewählt sind, daß die Summe für die Reihen von Abschnitten des Produktes der Länge jedes Abschnittes in der Richtung der Ausfluchtung und das $\Delta k$ für diesen Abschnitt etwa gleich $2\pi N$ ist, wobei $\underline{N}$ eine von Null verschiedene ganze Zahl ist, und derart, daß der nicht-lineare optische Koeffizient von mindestens einem Abschnitt geändert wird relativ zu dem nicht-linearen optischen Koeffizienten von mindestens einem angrenzenden Abschnitt; wobei das $\Delta k$ für jeden Abschnitt die Differenz zwischen der Summe der Ausbreitungskonstanten für die einfallenden Wellen für das Wellenlängenumwandlungssystem in diesem Abschnitt und der Summe der Ausbreitungskonstanten für die erzeugten Wellen für das Wellenlängenumwandlungssystem in diesem Abschnitt ist.

2. Verfahren nach Anspruch 1, wobei einfallende Wellen mit Frequenzen $\omega_1$ und $\omega_2$ verwendet werden, um Wellen mit der Frequenz $\omega_3$ zu erzeugen, und wobei $\omega_3$ gleich der Summe von $\omega_1$ und $\omega_2$ ist.

3. Verfahren nach Anspruch 1, wobei einfallende Wellen mit der Frequenz $\omega_4$ verwendet werden, um Wellen mit Frequenzen $\omega_5$ und $\omega_6$ zu erzeugen, und wobei $\omega_4$ gleich der Summe von $\omega_5$ und $\omega_6$ ist.

4. Verfahren nach einem der Ansprüche 1 bis 3, wobei zweite harmonische Wellen der einfallenden optischen Wellen erzeugt werden.

5. Verfahren nach einem der Ansprüche 1 bis 4, wobei

   - die Länge von jedem Abschnitt im Bereich von 0,25 μm bis 50 μm liegt;
   - die Breite von jedem Abschnitt im Bereich von 0,2 μm bis 50 μm liegt und
   - die Tiefe von jedem Abschnitt mit ausgetauschten Kationen im Bereich von 0,1 μm bis 50 μm liegt.

6. Verfahren nach einem der Ansprüche 1 bis 5, bei dem zur effizienten Erzeugung von blauem Licht ein Licht mit Wellenlängen im Bereich von 775 nm bis 950 nm als einfallende optische Welle verwendet wird und wobei ein periodisch segmentierter nicht-linearer optischer KTP (Kristall aus $KTiOPO_4$) eine Wellenleiterstruktur (14, 20) mit einer Periodizität von 3 bis 6 μm hat.

7. Verfahren nach einem der Ansprüche 1 bis 5, das zur Erzielung einer Erzeugung von harmonischen Frequenzen vom Typ I folgende Schritte aufweist:

   - Vorsehen des periodisch segmentierten, nicht-linearen optischen KTP in Form eines Wellenleiters (14, 20) und
   - Anlegen von TM-polarisiertem Licht als einfallende optische Wellen an den nicht-linearen optischen KTP-Wellenleiter.

**8.** Verfahren nach Anspruch 6 oder 7,
wobei der KTP-Wellenleiter mit zumindest einem von Rb und Tl dotiert ist.

**9.** Optischer Gegenstand zur Verwendung in einem Wellenlängenumwandlungssystem, wobei der optische Gegenstand mindestens ein optisches Umwandlungssegment aufweist, das aus einem Einkristall (22) besteht, der eine Reihe von ausgefluchteten Abschnitten (24 bis 28) aus optischen Materialien enthält, die ausgewählt sind aus (a) Materialien gemäß der Formel $K_{1-x}Rb_xTiOMO_4$ , wobei $\underline{x}$ Werte von Null bis Eins hat und $\underline{M}$ aus P und As gewählt ist, und (b) aus Materialien gemäß der Formel, wobei die Kationen der Formel teilweise ersetzt worden sind durch zumindest eines von $Rb^+$, $Tl^+$ und $Cs^+$ und mindestens eines von $Ba^{++}$, $Sr^{++}$ und $Ca^{++}$, mit der Maßgabe, daß mindestens ein Abschnitt aus optischen Materialien besteht, die aus (b) gewählt sind, und daß für optische Materialien, die aus (b) gewählt sind, wobei $\underline{x}$ größer als 0,8 ist, die Kationen gemäß der Formel teilweise ersetzt sind durch mindestens eines von $Tl^+$ und $Cs^+$ und mindestens eines von $Ba^{++}$, $Sr^{++}$ und $Ca^{++}$, wobei die Abschnitte so gewählt sind, daß die Summe des Produktes der Länge von jedem Abschnitt in der Richtung der Ausfluchtung und das $\Delta k$ für diesen Abschnitt etwa gleich $2\pi N$ ist, wobei $\underline{N}$ eine von Null verschiedene ganze Zahl ist, und derart, daß der nicht-lineare optische Koeffizient von mindestens einem Abschnitt verändert ist relativ zu dem nicht-linearen optischen Koeffizienten von mindestens einem angrenzenden Abschnitt; wobei das $\Delta k$ für jeden Abschnitt die Differenz zwischen der Summe der Ausbreitungskonstanten für die einfallenden Wellen für das Wellenlängenumwandlungssystem in diesem Abschnitt und der Summe der Ausbreitungskonstanten für die erzeugten Wellen für das Wellenlängenumwandlungssystem in diesem Abschnitt ist.

**10.** Gegenstand nach Anspruch 9,
der abwechselnde Abschnitte von $KTiOPO_4$ und $KTiOPO_4$ aufweist, bei dem die Kationen teilweise ersetzt worden sind durch $Ba^{++}$ und mindestens eines von $Tl^+$ und $Rb^+$.

**11.** Gegenstand nach Anspruch 9 oder 10,
wobei

- die Länge von jedem Abschnitt in dem Bereich von 0,25 µm bis 50 µm liegt,
- die Breite von jedem Abschnitt in dem Bereich von etwa 0,2 µm bis 50 µm liegt und
- die Tiefe von jedem Abschnitt mit ausgetauschten Kationen innerhalb des Bereiches von etwa 0,1 µm bis 50 µm liegt.

**12.** Gegenstand nach einem der Ansprüche 9 bis 11,
der ein Wellenleiter ist, welcher abwechselnde Abschnitte eines kristallinen Substrates gemäß der Formel $K_{1-x}Rb_xTiOMO_4$ , wobei $\underline{x}$ Werte zwischen Null und Eins hat und $\underline{M}$ entweder P oder As ist, und Abschnitte aus Substratmaterial aufweist, in welchem die Kationen des Substrats ersetzt worden sind durch ausreichende Kationen, die ausgewählt sind aus der Gruppe, welche aus $Rb^+$, $Cs^+$ und $Tl^+$ besteht, und ausreichenden Kationen, die aus der Gruppe gewählt sind, die aus $Ba^{++}$, $Sr^{++}$ und $Ca^{++}$ besteht, um den nicht-linearen optischen Koeffizienten um mindestens 1 % bezüglich des nicht-linearen optischen Koeffizienten des Substrats zu ändern.

**13.** Gegenstand nach einem der Ansprüche 9 bis 12,

wobei eine Differenz von mindestens etwa 1 % zwischen dem nicht-linearen optischen Koeffizienten für mindestens einen Abschnitt und dem nicht-linearen optischen Koeffizienten für mindestens einen benachbarten Abschnitt besteht;
und wobei eine Differenz von mindestens etwa 0,00025 zwischen dem Oberflächen-Brechungsindex des mindestens einen Abschnitts und dem Oberflächen-Brechungsindex des mindestens einen benachbarten Abschnitts besteht.

**14.** Gegenstand nach einem der Ansprüche 9 bis 13,
um die harmonischen Frequenzen von Licht zu erzeugen, der eine nicht-lineare optische KTP-Wellenleiterstruktur mit einem Kanal von abwechselnden Bereichen mit unterschiedlichen linearen und nicht-linearen Brechungsindizes mit einer Periodizität von 3 bis 6 µm in Kombination mit einer Einrichtung zum Injizieren von Licht mit einer Wellenlänge im Bereich von 775 nm bis 950 nm in den Kanal aufweist.

**15.** Gegenstand nach einem der Ansprüche 9 bis 13,
um eine Erzeugung von harmonischen Frequenzen vom Typ I von einer Quelle für Einfallslicht zu erhalten, wobei der periodisch segmentierte nicht-lineare optische KTP eine Wellenleiterstruktur (14, 20) hat und wobei der Gegenstand ferner eine Einrichtung aufweist, um das Einfallslicht zu polarisieren, so daß seine Polarisierungsrichtung senkrecht zu der Oberfläche des segmentierten periodischen nicht-linearen optischen KTP-Wellenleiters ist.

16. Gegenstand nach Anspruch 14 oder 15,
    wobei der KTP-Wellenleiter mit mindestens einem von Rb und Tl dotiert ist.

17. Optische Wellenleitereinrichtung, die folgendes aufweist:

    - mindestens einen Kanalwellenleiter (14, 20),
    - eine Einrichtung (13), um eine ankommende optische Welle in den Kanalwellenleiter einzukoppeln, und
    - eine Einrichtung (17), um eine austretende Welle aus dem Kanalwellenleiter auszukoppeln,

    wobei der Kanalwellenleiter ein optischer Gegenstand nach einem der Ansprüche 9 bis 13 ist.

18. Verfahren zur Herstellung eines Kanalwellenleiters für ein Wellenlängenumwandlungssystem, das folgende Schritte aufweist:

    (a) Bereitstellen der z-geschnittenen Oberfläche eines z-geschnittenen Substrats (22) eines Einkristallmaterials gemäß der Formel $K_{1-x}Rb_xTiOMO_4$ , wobei $\underline{x}$ Werte von Null bis Eins hat und $\underline{M}$ entweder P oder As ist, mit einer optisch glatten Oberfläche;
    (b) Bereitstellen eines geschmolzenen Salzes, das Kationen, ausgewählt aus der Gruppe, die aus $Rb^+$, $Cs^+$ und $Tl^+$ besteht, und Kationen enthält, die aus der Gruppe ausgewählt sind, die aus $Ba^{++}$, $Sr^{++}$ und $Ca^{++}$ besteht, mit der Maßgabe, daß dann, wenn $\underline{x}$ größer als 0,8 ist, das geschmolzene Salz Kationen enthält, die aus $Tl^+$ und $Cs^+$ und mindestens einem von $Ba^{++}$, $Sr^{++}$ und $Ca^{++}$ gewählt sind, und zwar in einer wirksamen Menge, um dann, wenn ihm die optisch glatte Oberfläche bei einer gewählten Temperatur für eine gewählte Zeit ausgesetzt wird, einen ausreichenden Kationenaustausch zu bewirken, um den Brechungsindex in Bezug auf den Brechungsindex des Substrats zu ändern, und um einen nicht-linearen optischen Koeffizienten zu erzeugen, der in Bezug auf den nicht-linearen optischen Koeffizienten des Substrats geändert ist;
    (c) Aufbringen eines Maskierungsmaterials auf das Substrat, um ein Muster von ausgefluchteten Gebieten längs eines Bereiches der optisch glatten Oberfläche zu bilden, die abwechselnd mit einem gegenüber dem geschmolzenen Salz resistenten Material maskiert und nicht-maskiert sind;
    (d) Eintauchen des maskierten Substrats in das geschmolzene Salz bei der gewählten Temperatur für die gewählte Zeit, um dadurch den Kationenaustausch in den nicht-maskierten Gebieten zu bewirken;
    (e) Entfernen des Maskierungsmaterials von dem Substrat; und
    (f) Polieren des Substrats, um einen sauberen Wellenleiter mit polierten Wellenleitereingangs- und Wellenleiterausgangsflächen zu bilden;

    wobei die Länge der maskierten und nicht-maskierten Gebiete so gewählt ist, daß nach dem Kationenaustausch in den nicht-maskierten Gebieten ein Kanalwellenleiter (14, 20) in dem Bereich der optisch glatten Oberfläche vorhanden ist, der mindestens ein optisches Umwandlungssegment aufweist, das aus einer Reihe von ausgefluchteten Abschnitten (24 bis 28) aus nicht-linearen optischen Materialien innerhalb eines Kristalls besteht; und derart, daß die Summe für die Reihen von Abschnitten des Produktes der Länge von jedem Abschnitt und das $\Delta k$ für diesen Abschnitt etwa gleich $2\pi N$ ist, wobei $\underline{N}$ eine von Null verschiedene ganze Zahl ist; wobei das $\Delta k$ für jeden Abschnitt die Differenz zwischen der Summe der Ausbreitungskonstanten für die einfallenden Wellen für das Wellenlängenumwandlungssystem in diesem Abschnitt und der Summe der Ausbreitungskonstanten für die erzeugten Wellenlängen für das Wellenlängenumwandlungssystem in diesem Abschnitt ist.

**Revendications**

1. Procédé pour la conversion de longueur d'onde comprenant l'étape de diriger les ondes optiques incidentes pour la conversion de longueur d'onde à travers un seul cristal (22) contenant une série de sections alignées (24 à 28) de matériaux optiques pour la conversion de longueur d'onde sélectionnés parmi (a) des matériaux ayant la formule $K_{1-x} Rb_x TiOMO_4$ dans laquelle x est de un à zéro et M est choisi entre P et As, et (b) des matériaux de ladite formule dans laquelle les cations de la formule ont été partiellement remplacés par au moins un de $Rb^+$, $Ti^+$ et $Cs^+$ et au moins un de $Ba^{++}$, $SR^{++}$ et $Ca^{++}$, avec la condition qu'au moins une section est faite de matériaux optiques choisis dans (b) et que pour les matériaux optiques choisis dans (b) dans lesquels x est supérieur à 0,8, les cations de la formule sont partiellement remplacés par au moins un de $Ti^+$ et $Cs^+$ et au moins un de $Ba^{++}$, $SR^{++}$

et Ca$^{++}$, les sections étant choisies de façon que la somme pour les séries de sections du produit de la longueur de chaque section dans la direction d'alignement et $\Delta k$ pour cette section est égal à environ $2\pi N$, où N est un entier autre que zéro, et de façon que le coefficient optique non linéaire d'au moins une section soit changé par rapport au coefficient optique non linéaire d'au moins une section adjacente ; cependant que le $\Delta k$ pour chaque section est la différence entre la somme des constantes de propagation pour les ondes incidentes pour le système de conversion de longueur d'onde dans cette section et la somme des constantes de propagation pour les ondes engendrées pour le système de conversion de longueur d'onde dans cette section.

2. Procédé selon la revendication 1, dans lequel des ondes incidentes de fréquences $\omega_1$ et $\omega_2$ sont utilisées pour engendrer des ondes de fréquence $\omega_3$ ; $\omega_3$ étant la somme de $\omega_1$ et $\omega_2$.

3. Procédé selon la revendication 1, dans lequel des ondes incidentes de fréquences $\omega_4$ sont utilisées pour engendrer des ondes de fréquence $\omega_5$ et $\omega_6$ ; $\omega_4$ étant la somme de $\omega_5$ et $\omega_6$.

4. Procédé selon une quelconque des revendications 1 à 3, dans lequel des ondes harmoniques secondes des ondes optiques incidentes sont engendrées.

5. Procédé selon une quelconque des revendications 1 à 4 dans lequel :

   - la longueur de chaque section est comprise dans le domaine de 0,25 µm à 50 µm ;
   - la largeur de chaque section est comprise dans le domaine de 0,2 µm à 50 µm, et
   - la profondeur de chaque section changée de cation est comprise dans le domaine de 0,1 µm à 50 µm.

6. Procédé selon une quelconque des revendications 1 à 5, dans lequel pour engendrer efficacement de la lumière bleu, une lumière ayant des longueurs d'ondes dans le domaine de 775 à 950 nm est utilisée comme onde optique incidente, et dans lequel un KTP (Cristal de KTiO PO$_4$) optique non-linéaire segmenté périodiquement a une structure de guide d'onde (14, 20) ayant une périodicité de 3 à 6 µm.

7. Procédé selon une quelconque des revendications 1 à 5, qui pour obtenir la génération de fréquence harmonique type I, comprend les étapes suivantes :

   - fournir le KTP optique non linéaire segmenté périodiquement sous forme d'un guide d'onde (14, 20), et
   - appliquer une lumière polarisée TM comme ondes optiques incidentes au guide d'onde KTP optique non linéaire.

8. Procédé selon la revendication 6 ou 7, dans lequel le guide d'onde KTP est dopé avec au moins un de R$_b$ et T$_i$.

9. Article optique utilisable dans un système de conversion de longueur d'onde, ledit article optique comprenant au moins un segment de conversion optique constitué d'un seul cristal (22) contenant une série de sections alignées (24 à 28) de matériaux optique sélectionnés parmi (a) des matériaux ayant la formule K$_{1-x}$ Rb$_x$ TiOMO$_4$ dans laquelle x est de zéro à un et M est choisi entre P et As, et (b) des matériaux de ladite formule dans laquelle les cations de la formule ont été partiellement remplacés par au moins un de Rb$^+$, Ti$^+$ et Cs$^+$ et au moins un de Ba$^{++}$, SR$^{++}$ et Ca$^{++}$, avec la condition qu'au moins une section est faite de matériaux optiques choisis dans (b) et que pour les matériaux optiques choisis dans (b) dans lesquels x est supérieur à 0,8, les cations de la formule sont partiellement remplacés par au moins un de Ti$^+$ et Cs$^+$ et au moins un de Ba$^{++}$, SR$^{++}$ et Ca$^{++}$, dans lequel les sections sont choisies de façon que la somme du produit de la longueur de chaque section dans la direction d'alignement et $\Delta k$ pour cette section est égal à environ $2\pi N$, où N est un entier autre que zéro, et de façon que le coefficient optique non linéaire d'au moins une section soit changé par rapport au coefficient optique non linéaire d'au moins une section adjacente ; cependant que le $\Delta k$ pour chaque section est la différence entre la somme des constantes de propagation pour les ondes incidentes pour le système de conversion de longueur d'onde dans cette section et la somme des constantes de propagation pour les ondes engendrées pour le système de conversion de longueur d'onde dans cette section.

10. Article selon la revendication 9, qui comporte des sections alternées de KTiOPO$_4$ et KTiOPO$_4$ dans lequel les cations ont été partiellement remplacés par Ba$^{++}$, et au moins un de Ti$^+$ et Rb$^+$.

11. Article selon la revendication 9 ou 10 dans lequel :

- la longueur de chaque section est comprise dans le domaine de 0,25 μm à 50 μm ;
- la largeur de chaque section est comprise dans le domaine de 0,2 μm à 50 μm, et
- la profondeur de chaque section changée de cation est comprise dans le domaine de 0,1 μm à 50 μm.

**12.** Article selon une des revendications 9 à 11, qui est un guide d'onde comportant des sections alternées d'un substrat cristallin ayant la formule $K_{1-x} Rb_x TiOMO_4$ dans laquelle x est de zéro à un et M est P ou As, et les sections du matériau substrat dans lequel les cations du substrat ont été remplacés par suffisamment de cations sélectionnés dans le groupe constitué par $Rb^+$, $Cs^+$ et $Ti^+$, et suffisamment de cations sélectionnés dans le groupe constitué par $Ba^{++}$, $SR^{++}$ et $Ca^{++}$ pour changer le coefficient optique non linéaire d'au moins 1% par rapport au coefficient optique non linéaire du substrat.

**13.** Article selon une des revendications 9 à 12, dans lequel il y a au moins une différence de 1% entre le coefficient optique non linéaire pour au moins une section et le coefficient optique non linéaire pour au moins une section adjacente, et dans lequel il y a au moins une différence d'environ 0,00025 entre l'indice de réfraction de surface d'au moins une section et l'indice de réfraction de surface d'au moins une section adjacente.

**14.** Article selon une des revendications 9 à 13, pour engendrer la fréquence harmonique de lumière comportant une structure de guide d'onde KTP optique non linéaire ayant un canal de régions alternantes avec différents indices de réfraction linéaires et non linéaires avec une périodicité de 3 à 6 μm en combinaison avec des moyens pour injecter de la lumière avec une longueur d'onde dans le domaine de 775 à 950 nm dans le canal.

**15.** Article selon une des revendications 9 à 13, pour obtenir une génération de fréquence harmonique type I d'une source de lumière incidente, dans lequel le KTP optique non linéaire segmenté périodiquement a une structure de guide d'onde (14, 20) et l'article comporte en outre des moyens pour polariser la lumière incidente de façon que sa direction de polarisation soit perpendiculaire à la surface du guide d'onde KTP optique non linéaire segmenté périodiquement.

**16.** Article selon la revendication 14 ou 15, dans lequel le guide d'onde KTP est dopé avec au moins un de Rb et Ti.

**17.** Dispositif de guide d'onde optique comprenant :

- au moins un guide d'onde (14, 20) de canal,
- des moyens (13) pour coupler une onde optique incidente dans le guide d'onde de canal, et
- des moyens (17) pour coupler une onde émergente hors du guide d'onde de canal, dans lequel le guide d'onde de canal est un article optique tel que défini dans une quelconque des revendication 9 à 13.

**18.** Procédé pour préparer un guide d'onde de canal pour un système de conversion de longueur d'onde comportant les étapes suivantes :

a) - fournir la surface à coupe z d'un substrat (22) à coupe z d'un seul matériau cristallin ayant la formule $K_{1-x} Rb_x TiOMO_4$ dans laquelle x est de zéro à un et M est P ou As avec une surface optique polie ;
b) - fournir un sel fondu contenant des cations sélectionnés dans le groupe constitué par $Rb^+$, $Cs^+$ et $Ti^+$ et des cations sélectionnés dans le groupe constitué par $Ba^{++}$, $SR^{++}$ et $Ca^{++}$, avec la condition que quand x est supérieur à 0,8, le sel fondu contient des cations sélectionnés parmi $Ti^+$ et $Cs^+$ et au moins un de $Ba^{++}$, $SR^{++}$ et $Ca^{++}$, dans une quantité efficace pour fournir lors de l'exposition à la surface polie optiquement, à une température sélectionnée pendant une durée sélectionnée, suffisamment de remplacement de cation pour changer l'indice de réfraction par rapport à l'indice de réfraction du substrat et pour obtenir un coefficient optique non linéaire qui est changé par rapport au coefficient optique non linéaire du substrat ;
c) - appliquer un matériau de masque au substrat pour obtenir un motif de zones alignées le long d'une partie de la surface polie optiquement qui soit en alternance masquée avec un matériau résistant au sel fondu et non masquée ;
d) - plonger le substrat masqué dans le sel fondu à la température sélectionnée pour la durée sélectionnée, pour ainsi obtenir le remplacement de cation dans les zones non masquées ;
e) - enlever le matériau de masque du substrat ; et
d) - parachever le substrat pour obtenir un guide d'onde propre avec des faces polies d'entrée et de sortie du guide d'onde ;

dans lequel la longueur des zones masquées et non masquées est sélectionnée de façon qu'après le remplacement de cation dans les zones non masquées, un guide d'onde de canal (14, 20) soit obtenu à la partie de la surface optiquement polie qui comporte au moins un segment de conversion optique constitué d'une série de sections alignées (24 à 28) de matériaux optiques non linéaires dans un cristal ; et de façon que la somme pour les séries de sections du produit de la longueur de chaque section et $\Delta k$ pour cette section est égal à environ $2\pi N$, où N est un entier autre que zéro ; dans laquelle $\Delta k$ pour chaque section est la différence entre la somme des constantes de propagation pour les ondes incidentes pour le système de conversion de longueur d'onde dans cette section et la somme des constantes de propagation pour les ondes engendrées pour le système de conversion de longueur d'onde dans cette section.

# FIG.1

# FIG.2

# FIG.3

# FIG.4

FIG.5

# FIG. 6

Rb, Ti : KTP GUIDES
WITH GRATINGS / SEGMENTS

| PERIOD | 5μm | | | | 6μm | | | | 3μm | | | | 4μm | | | | 5μm | | | | 6μm | | | | 3μm | | | | 4μm | | | | 5μm | | |
|---|---|---|---|---|---|---|---|---|---|---|---|---|---|---|---|---|---|---|---|---|---|---|---|---|---|---|---|---|---|---|---|---|---|---|---|
| WIDTH | 7μ | 6μ | 5μ | 4μ | 9 | 8 | 5 | 4 | | | | | | | | | | | | | | | | | | | | | | | | | | | | |
| # | 5 | 6 | 7 | 8 | 9 | 10 | 13 | 14 | 15 | 16 | 19 | 20 | 21 | 22 | 25 | 26 | 27 | 28 | 31 | 32 | 33 | 34 | 37 | 38 | 39 | 40 | 43 | 44 | 45 | 46 | 49 | 50 | 51 | 52 | 53 |

850 nm
425 nm

924 nm
462 nm

950 nm
475 nm

EP 0 454 071 B1